# EUROPÄISCHE PATENTSCHRIFT

(11) **EP 2 402 958 B1**
(45) Veröffentlichungstag und Bekanntmachung des Hinweises auf die Patenterteilung: **31.03.2021**
(21) Anmeldenummer: 11165024.8
(22) Anmeldetag: 06.05.2011
(51) Int. Cl.: H01B 3/40, H01B 3/08, H02K 3/30, H02K 3/40, B82Y 30/00

(54) **Elektroisolationssystem für eine elektrische Hochspannungsrotationsmaschine**
Electric isolation system for an electrical high voltage rotation machine
Système d'isolation électrique pour une machine électrique rotative à haute tension

(30) Priorität: 07.05.2010 DE 102010019723
(43) Veröffentlichungstag der Anmeldung: 04.01.2012
(73) Patentinhaber: Siemens Energy Global GmbH & Co. KG, 81739 München (DE)
(72) Erfinder: Gruebel, Andre, 97486 Königsberg/Hellingen (DE); Gröppel, Peter, Dr., 91052 Erlangen (DE); Übler, Matthias, Dr., 92289 Ursensollen (DE)

(56) Entgegenhaltungen:
- EP-A1- 0 356 928
- EP-A1- 0 440 865
- EP-A2- 0 717 073
- DE-A1- 10 345 139
- US-A1- 2008 284 262
- US-B1- 6 190 775

## Beschreibung

Für eine Hochspannungsrotationsmaschine, wie beispielsweise einen Turbogenerator in einem Kraftwerk zur Erzeugung von elektrischer Energie, ist ein hoher Wirkungsgrad und eine hohe Verfügbarkeit gefordert. Daraus resultiert in der Regel eine hohe mechanische, thermische und elektrische Beanspruchung der Bauteile des Turbogenerators. Der Turbogenerator weist eine Ständerwicklung auf, an die eine besonders hohe Anforderung bezüglich Festigkeit und Zuverlässigkeit gestellt ist. Insbesondere ist das Isoliersystem der Ständerwicklung an der Grenzfläche zwischen der Hauptisolierung und dem Blechpaket der Ständerwicklung durch eine hohe thermische, thermomechanische, dynamische und elektromechanische Betriebsbeanspruchung stark belastet, wodurch das Risiko einer Beschädigung des Isoliersystems der Ständerwicklung durch Teilentladungen hoch ist, die beim Betrieb des Turbogenerators unablässig auftreten. Mit dem Isoliersystem sind elektrische Leiter (Drähte, Spulen, Stäbe, Teilleiter) dauerhaft gegeneinander und gegen ein Ständerblechpaket oder die Umgebung isoliert. Innerhalb des Turbogenerators unterscheidet man die Isolierung zwischen Teilleitern (Teilleiterisolierung), zwischen den Leitern bzw. Windungen (Leiter- bzw. Windungsisolierung) und zwischen Leiter und Massepotenzial im Nut- und Wickelkopfbereich (Hauptisolierung). Die Dicke der Hauptisolierung ist sowohl an die Nennspannung der Maschine als auch an die Betriebs- und Fertigungsbedingungen angepasst.

Dadurch, dass die Hochspannungsisolierung elektrisch stark belastetet ist, tritt an den Grenzflächen eine teilentladungsinduzierte Erosion auf, die zur Ausbildung von "Treeing"-Kanälen führt. An den "Treeing"- Kanälen ist die Hochspannungsisolierung nur noch reduziert elektrisch belastbar, ohne dass ein elektrischer Durchschlag der Hochspannungsisolierung auftritt. Abhilfe könnte der Einsatz von imprägnierten, geschichteten Glimmerisolierungen schaffen, die als Glimmerbänder hergestellt sind. Die Leiter und die Formspulen der Hochspannungsrotationsmaschine sind mit den Glimmerbändern umwickelt und in einem Vakuum-Druck-Imprägnierungs-Prozess (VPI) mit Kunstharz imprägniert. Von dem Verbund von Imprägnierharz und Trägermaterial des Glimmers ist die mechanische Festigkeit und die Teilentladungsresistenz der elektrischen Isolierung definiert. Nachteilig ist allerdings, dass die mit dem Glimmerband umwickelten Leiter nur von einem material-, energie- und zeitaufwendigen Produktionsprozess in vielen Verfahrensschritten zu applizieren sind.

Der herkömmlich verwendete Naturglimmer mit begrenzten Ressourcen an Muskowit, Phlogopit in z.B. Madagaskar, Indien oder Brasilien kann nur mit hohem Aufwand an Zeit, Energie und Wasser abgebaut, gereinigt und zu einem Feinglimmerpapier verarbeitet werden. Das Feinglimmerpapier wird in ein Glimmerband eingearbeitet, das in mehreren Lagen um elektrische Leiter gewickelt wird. Anschließend wird es mit einem Reaktionsharz imprägniert und ausgehärtet. Die so entstandene Schichtung aus organischen und anorganischen Materialien bildet mikroskopische Feststoff-Feststoff-Grenzflächen, wobei von den Glimmerplättchen die Beständigkeit der Feststoff-Feststoff-Grenzflächen gegen Teilentladungen und thermische Beanspruchungen herabgesetzt ist.

Ferner ist durch die Lagen der Abstand zwischen den isolierten, in die Statornut eingelegten Leitern und dem Blechpaket definiert. Durch den aufwendigen VPI-Prozess sollen kleinste Hohlräume in der Isolierung gefüllt werden, da innere Gas-Feststoff-Grenzflächen die elektrische Festigkeit der Isolierung aufgrund von darin zündenden Teilentladungswolken schwächen würden. Dieser Prozess ist energieaufwendig, da die gesamte Hochspannungsrotationsmaschine oder zumindest der vollständige Leiter bei der Imprägnierung und der Aushärtung aufgeheizt werden müssen.

Aufgabe der Erfindung ist es, ein Elektroisolationssystem für eine Hochspannungsrotationsmaschine zu schaffen, das eine hohe Beständigkeit hat, wobei das Elektroisolationssystem einfach in der Herstellung ist.

Das erfindungsgemäße Elektroisolationssystem für eine Hochspannungs-rotationsmaschine, mit einem Umhüllkörper für einen stromführenden Leiter der Hochspannungsrotationsmaschine, wobei der Umhüllkörper eine Gieß-, Pressharz- und/oder Polymerformulierung als ein Basisharz aufweist, das ein thermoplastisches, duroplastisches oder elastomeres Kunstharz ist, wobei dem Basisharz mindestens eine, nanopartikuläre Partikel aufweisende, Füllstoffkomponente zugesetzt ist, deren Partikel anisotrop sind und wobei die anisotrope Füllstoffkomponente ein Schichtsilikat ist, das vollständig exfoliert im Basisharz vorliegt.

Das Basisharz ist bevorzugt ein UV-, kalt-, oder heißgehärtetes, phthalsäureanhydridisch oder aminisch gehärtetes Epoxidkunstharz, wobei bevorzugtermaßen das Epoxidkunstharz stickstoffbasiert oder durch einen UV-Katalysator beschleunigt ist. Ferner ist das Epoxidkunstharz bevorzugt aus aromatischen Bisphenol-A- oder Bisphenol-F-Diglycidylether, und/oder cycloaliphatischem Epoxidkunstharz oder phenolischem Novolak. Alternativ bevorzugt ist das Epoxidkunstharz aus Blockcopolymer, insbesondere Polyurethan, Polyethen, Polyetherimid, Polypropen, Polybutadien, Polystyren, Polyacrylat, Polyvinylchlorid.

Außerdem haben die Partikel der mindestens einen Füllstoffkomponenten bevorzugt eine Dimension von 1 bis 100 nm. Die mindestens eine Füllstoffkomponente ist anisotrop. Hierbei ist die Füllstoffkomponente ein Schichtsilikat, das vollständig exfoliert und insbesondere mit Imidaminen organophiliert im Basisharz vorliegt.

Die Gesamtkonzentration der mindestens einen Füllstoffkomponente liegt bevorzugt im Bereich von 0,5 bis 80 Gew.-% und die Partikel der mindestens einen Füllstoffkomponenten haben eine nanoskalige Dimension, insbesondere 1 bis 100 nm. Ferner ist es bevorzugt, dass während der Gelier-, Härtungs- oder Formgebungsphase des Basisharzes dieses mit Überdruck insbesondere von Luft, Stickstoff oder Inertgas beaufschlagt ist, wobei bevorzugtermaßen der Überdruck im Bereich von 1,1 bis 10 bar liegt.

Der erfindungsgemäße Umhüllkörper hat eine bessere elektrische und mechanische Güte als eine herkömmliche, glimmerbandisolierte und postimprägnierte Isolationsbaubauweise. Bevorzugt ist ein dünnflüssiges, isotrop und/oder anisotrop, füllstoffbeladenes und mindestens in einer Komponente nanodimensional vorliegendes kalt- oder heißhärtendes Kunstharz das Basisharz des Umhüllkörpers zur Umhüllung eines Leiters, beispielsweise aus Kupfer oder Aluminium, eines Generators oder eines Motors. Ferner bevorzugt ist der Umhüllkörper in einer entsprechenden Werkzeugform unter Druckgasbeladung auf den Leiter aufgebracht. Besonders vorteilhaft erweist sich das Basisharz des Typus Bisphenol-A- oder -F-Diglycidylether, welches phthalsäureanhydridisch oder aminisch gehärtet ist. Zur Initiierung und Beschleunigung der Härtungsreaktion in Temperaturbereichen um 800 °C kann bevorzugt im Anhydridfall ein Amin zugesetzt werden (z.B. Dimethylbenzylamin). Zusätzlich können bevorzugt Additive in geringen Mengen, wie etwa Flexibilisatoren, zugesetzt werden. Bevorzugtermaßen sind dem Basisharz isotrope oder anisotrope Füllstoffe oder Mischungen davon zugesetzt. Es ist erfindungsgemäß, dass mindestens eine der Füllstoffkomponenten anisotrop und nanopartikulär vorliegt. Als besonders vorteilhaft für hohe Teilentladungsresistenzen und lange Lebensdauern (unter Prüfbedingungen bei Û/(√2 1/mm) = 10 - 20 kV/mm Feldbelastung) haben sich Füllstoffe aus organophilierten und evident exfolierten, nanopartikulären Schichtsilikaten in Reinzuschlägen oder deren Mischungen herausgestellt.

Zur Herstellung von mit dem Umhüllkörper umhüllten Leiter ist das flüssige, füllstoffbeaufschlagte Basisharz in ein druckdichtes, evakuiertes Werkzeug zu füllen, in dem die zu umhüllenden Leiter zentrisch und umflutbar angeordnet sind. Nach der Befüllung wird bevorzugt unter Überdruck das Basisharz vollständig ausgehärtet und geformt. Dadurch sind die mit dem Umhüllkörper umhüllten Leiter einfach herstellbar, wobei die Leiter mit ihren Umhüllkörpern eine hohe Lebensdauererwartung haben.

Das erfindungsgemäße Elektroisolationssystem hat insbesondere verbesserte Lebensdauerkennwerte bei Isolationen von 1 bis 10 mm verglichen mit herkömmlichen glimmerbehafteten Isolationsmaterialien. Ferner hat das erfindungsgemäße Elektroisolationssystem überraschenderweise am Leiter verringerte dielektrische Verlustfaktoren tan δ. Durch das Versehen des Basisharzes mit den anisotropen, nanopartikulären Füllstoffen oder deren Mischung können die mechanischen Kennwerte des gehärteten Umhüllkörper vorteilhaft frei variieren werden. Dadurch ist es ermöglicht, dass durch die Verwendung von nanopartikulären Füllstoffen hochfließfähige und hochgradig rissresistente Isolationsmaterialen mit niedrigen thermischen Ausdehnungskoeffizienten und damit optimalen Anbindungen an den Leiteroberflächen hergestellt werden können, die eine hohe Teilentladungsresistenz und somit eine hohe Lebensdauer haben. Außerdem ist der Herstellungsprozess einfach, da lediglich ein einziges evakuierbares und flutbares Werkzeug notwendig ist, wobei die verwendeten Materialien kostengünstig und in größeren Mengen verfügbar sind. Dies ermöglicht eine hohe Designfreiheit bei kostengünstiger Herstellung bei nachweislich verbesserter Lebensdauer.

Das Basisharz kann alle Derivate von Kunstharzen umfassen, besonders vorteilhaft sind Epoxidharze des Typs Bisphenoldiglycidylether A oder F. Bevorzugt ist die Härtung mittels Phthalsäureanhydridderivaten, z.B. Methyltetrahydrophthalsäureanhydrid oder Methylhexahydrophthalsäureanhydrid. Bevorzugt ist auch eine aminische Härtung bei niedrigen Temperaturen, z.B. bei Raumtemperatur. Bevorzugt ist ebenfalls die Verwendung von Polyurethan, Polyetherimide, Polyacrylate, Polyethen, Polypropen, Polystyren, Blockcopolymere, usw. Das Basisharz ist bevorzugt mit Mikropartikeln versehen, z.B. mit Quarzmehl oder Quarzgut, gegebenenfalls oberflächenbehandelt.

Erfindungsgemäß ist die Ein- bzw. Zumischung nanopartikulärer Füllstoffe, die anisotrop sind. Die anisotropen nanopartikulären Füllstoffe sind ferner Schichtsilikate, die vollständig delaminiert, d.h. evident exfoliert im Basisharz vorliegen. Bevorzugt ist es ferner, dass die anisotropen nanopartikulären Füllstoffe mit Imidaminen ionenausgetauscht sind.

Außerdem sind Bornitride als anisotroper Füllstoff bevorzugt.

Vorteilhaft wird das Kunstharz mit anisotropem, nanopartikulärem Schichtsilikat beladen für die Isolationsformgebung verwendet, so dass das Elektroisolationssystem verbesserte Isolationseigenschaften und eine längere Lebensdauer hat verglichen mit einem herkömmlichen epoxidharzimprägnierten Glimmerband. Der dem Umhüllkörper zugefügte Füllstoff weist bevorzugt eine oder mehrere Komponenten und isotrope und/oder anisotrope Formen auf, wobei wenigstens eine der Komponenten nanopartikuläre Dimensionen hat. Der Gesamtfüllstoffanteil isotroper und/oder anisotroper Füllstoffzuschläge ist bevorzugt bei 0,5 bis 80 Gew.-%. Die Verwendung von Überdruck, bevorzugt bis zu 10 bar, während der Formgebungs- bzw. Härtungsphase erweist sich überraschenderweise als vorteilhaft.

Anhand von Referenz-Beispielen wird im Folgenden die Technik näher erläutert.

Typische 2-komponentige isotrope Füllstoff/Harzmischungen setzen sich wie folgt zusammen:

**Tab. 1 Referenzbeispiel 1**

| No. | Komponente | Substanz | Masseteile |
|---|---|---|---|
| 1 | Reaktionsharz | Bisphenol-A-Digylcidylether | 100,00 |
| 2 | Reaktionshärter | Methylphthalsäureanhydrid | 82,50 |
| 3 | Mikrofüllstoff | Quarzmehl, OF-silanisiert | 307,00 |
| 4 | Nanofüllstoff | Siliciumdioxid, OF-behandelt | 62,00 |
| 5 | Reaktionsbeschleuniger | Dimethylbenzylamin | 0,50 |
| 6 | Flexibilisator | Hochmolekular glykolisch | 4,00 |

| | | | |
|---|---|---|---|
| Mikropartikelfüllstoffanteil = 55,2Gew.%; Nanopartikelfüllstoffanteil = 11,2 Geb.%; Summe 66,4 Gew.% | | | |

**Tab. 2 Eigenschaftskennwerte des Isolierstoffes des Referenzbeispiels 1**

| Materialkennwert | Wert | Einheit |
|---|---|---|
| Kritischer Spannungsintensitätsfaktor K_{1C} | 2,5-2,8 | MPa·√m |
| Kritische Bruchenergie G_{1C} | 600-700 | J/m² |
| Elastizitätsmodul | 9000-10000 | MPa |
| Linearer thermischer Ausdehnungskoeffizient α | 25-28 | µm/(m·K) |
| Dielektrischer Verlustfaktor tan δ(25°C) | 3-11·10⁻³ | [-] |
| Mittlere Lebensdauer t_{D} (Û/ (√2·mm)) = 13 kV/mm) | 1312 | [h] |

**Tab. 3 Referenzbeispiel 2**

| No. | Komponente | Substanz | Masseteile |
|---|---|---|---|
| 1 | Reaktionsharz | Bisphenol-A-Digylcidylether | 100,00 |
| 2 | Reaktionshärter | Methylphthalsäureanhydrid | 79,50 |
| 3 | Nanofüllstoff | Siliciumoxid, OF-behandelt | 50,00 |
| 4 | Nanofüllstoff | Siloxan-Acryl-Copolymer | 6,00 |
| 5 | Reaktionsbeschleuniger | B1061 Beschleunigermischung | 0,30 |
| 6 | Flexibilisator | Hochmolekular glykolisch | 4,00 |

| | | | |
|---|---|---|---|
| Nanopartikelfüllstoffanteil = SiO₂21 Gew.-%; Siloxan-Acryl-Copolymer 2,5 Gew.-%; Summe 23,5 Gew.-% | | | |

**Tab. 4 Eigenschaftskennwerte des Isolierstoffes des Referenzbeispiels 2**

| Materialkennwert | Wert | Einheit |
|---|---|---|
| Kritischer Spannungsintensitätsfaktor K_{1C} | 1,3-1,8 | MPa·√m |
| Kritische Bruchenergie G_{1C} | 450-550 | J/m² |
| Elastizitätsmodul | 4000-5000 | MPa |
| Linearer thermischer Ausdehnungskoeffizient α | 40-45 | µm/(m·K) |
| Dielektrischer Verlustfaktor tan δ(25°C) | 3-6·10⁻³ | [-] |
| Mittlere Lebensdauer t_{D} (Û/(√2·mm) = 13 kV/mm) | 1073 | [h] |

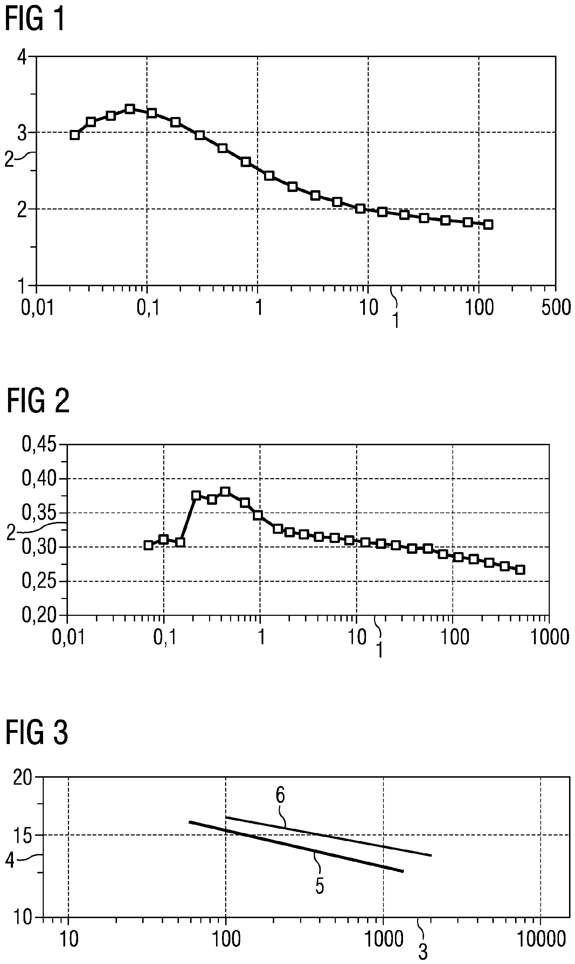

Wie den Referenzbeispielen zu entnehmen ist, erzielen derartig bereitete Vergussmassen für Isolationswerkstoffe für den Generatorbau sehr gute thermo- und bruchmechanische Kennwerte bei gleichzeitig hoher elektrischer Lebensdauer sowie hohem Fließvermögen. Das Fließverhalten des Umhüllkörpers gemäß dem Referenzbeispiel 1 ist in Figur 1 und das Fließverhalten des Umhüllkörpers gemäß dem Referenzbeispiel 2 ist in Figur 2 gezeigt, wobei mit 1 die Abszisse, an der die Scherrate γ [s⁻¹] aufgetragen ist, und mit 2 die Ordinate bezeichnet ist, an der die Viskosität η [Pas] des Umhüllkörpers aufgetragen ist.

In Figur 3 ist ein Diagramm gezeigt, in dem die mittleren Lebenserwartungen von Testleiter-Ensambles aus Kupfer aufgetragen ist, die erfindungsgemäß ummantelt sind, wobei an der mit 3 bezeichneten Abszisse die Lebensdauer t_{D} [h] und an die mit 4 bezeichneten Ordinate die Feldstärke E_{D} [kV/mm] aufgetragen sind. Mit 5 ist die mittlere Lebensdauererwartung eines erfindungsgemäßen glimmerfreien Isolationswerkstoff und mit 6 eine herkömmliche Isolation aus Glimmerband und Imprägnierharz bezeichnet. Die Prüfungsbedingungen liegen bei einer Feldbelastung von Û/(√2·mm) = 13 kV/mm.

Ferner hat der erfindungsgemäße Umhüllkörper überraschenderweise sehr niedrige dielektrische Verlustfaktoren tan δ bei einer Verwendung von Überdruck während der Formgebung. Zusätzlich zur einfacheren Applikation ist die erfindungsgemäße, glimmerfreie Isolation weitaus billiger und zeitsparender zu realisieren.

## Patentansprüche

1. Elektroisolationssystem für eine Hochspannungsrotationsmaschine, mit einem Umhüllkörper für einen stromführenden Leiter der Hochspannungsrotationsmaschine, wobei der Umhüllkörper eine Gieß-, Pressharz- und/oder Polymerformulierung als ein Basisharz aufweist, das ein thermoplastisches, duroplastisches oder elastomeres Kunstharz ist, wobei dem Basisharz mindestens eine, nanopartikuläre Partikel aufweisende, Füllstoffkomponente zugesetzt ist, deren Partikel anisotrop sind und wobei die anisotrope Füllstoffkomponente ein Schichtsilikat ist, das vollständig exfoliert im Basisharz vorliegt.

2. Elektroisolationssystem gemäß Anspruch 1, wobei eine weitere Füllstoffkomponente zugesetzt ist, deren Partikel isotrop sind.

3. Elektroisolationssystem gemäß Anspruch 1 oder 2, wobei eine Füllstoffkomponente zugesetzt ist, deren Partikel Polymer sind.

4. Elektroisolationssystem gemäß Anspruch 3, wobei das Polymer Polysiloxan, Polybutadien, Polystyrol, Polyvinylchlorid, CTBN, ABS oder PMMA ist.

5. Elektroisolationssystem gemäß einem der Ansprüche 1 bis 5, wobei das Basisharz ein UV-, kalt-, oder heißgehärtetes, phthalsäureanhydridisch oder aminisch gehärtetes Epoxidkunstharz ist.

6. Elektroisolationssystem gemäß Anspruch 5, wobei das Epoxidkunstharz stickstoffbasiert oder durch einen UV-Katalysator beschleunigt ist.

7. Elektroisolationssystem gemäß Anspruch 5 oder 6, wobei das Epoxydkunstharz aus aromatischen Bisphenol-A- oder Bisphenol-F-Diglycidylether, und/oder cycloaliphatischem Epoxidkunstharz oder phenolischem Novolak ist.

8. Elektroisolationssystem gemäß Anspruch 5 oder 6, wobei das Basisharz Polyurethan, Polyethen, Polyetherimid, Polypropen, Polybutadien, Polystyren, Polyacrylat, Polyvinylchlorid, umfasst.

9. Elektroisolationssystem gemäß einem der Ansprüche 1 bis 8, wobei die Partikel der mindestens einen anisotropen Füllstoffkomponente eine Dimension von 1 bis 100 nm haben.

10. Elektroisolationssystem gemäß einem der Ansprüche 1 bis 9, wobei das Schichtsilikat der mindestens einen anisotropen Füllstoffkomponente mit Imidamin exfoliert vorliegt.

## Claims

1. Electrical insulation system for a high-voltage rotation machine, having a shell body for a current conductor of the high-voltage rotation machine, wherein the shell body includes a casting resin formulation, a moulding resin formulation and/or polymer formulation as a base resin which is a thermoplastic, thermoset or elastomeric synthetic resin, wherein at least one filler component including nanoparticulate particles has been added to the base resin, the particles of which are anisotropic, and wherein the anisotropic filler component is a sheet silicate in fully exfoliated form in the base resin.

2. Electrical insulation system according to Claim 1, wherein a further filler component having isotropic particles has been added.

3. Electrical insulation system according to Claim 1 or 2, wherein a filler component having polymeric particles has been added.

4. Electrical insulation system according to Claim 3, wherein the polymer is polysiloxane, polybutadiene, polystyrene, polyvinylchloride, CTBN, ABS or PMMA.

5. Electrical insulation system according to any of Claims 1 to 5, wherein the base resin is a UV-, cold- or hot-cured synthetic epoxy resin cured by phthalic anhydride or amine.

6. Electrical insulation system according to Claim 5, wherein the synthetic epoxy resin is nitrogen-based or accelerated by a UV catalyst.

7. Electrical insulation system according to Claim 5 or 6, wherein the synthetic epoxy resin is composed of aromatic bisphenol A diglycidyl ether or bisphenol F diglycidyl ether, and/or cycloaliphatic synthetic epoxy resin or phenolic novolak.

8. Electrical insulation system according to Claim 5 or 6, wherein the base resin comprises polyurethane, polyethene, polyetherimide, polypropylene, polybutadiene, polystyrene, polyacrylate, polyvinylchloride.

9. Electrical insulation system according to any of Claims 1 to 8, wherein the particles of the at least one anisotropic filler component have a dimension of 1 to 100 nm.

10. Electrical insulation system according to any of Claims 1 to 9, wherein the sheet silicate of the at least one anisotropic filler component has been exfoliated with imide amine.

## Revendications

1. Système d'isolation électrique pour une machine tournante à haute tension, comprenant un corps de gaine pour un conducteur transporteur de courant de la machine tournante à haute tension, dans lequel le corps de gaine comprend une résine de coulée, une résine de moulage et/ou une formulation de polymère à titre de résine de base, qui est une résine synthétique thermoplastique, thermodurcissable ou élastomère, dans lequel au moins un composant de matière de charge comprenant des particules nanoparticulaires est ajouté à la résine de base, dont les particules sont anisotropes, et le composant de matière de charge anisotrope est un phyllosilicate qui est présent entièrement sous forme exfoliée dans la résine de base.

2. Système d'isolation électrique selon la revendication 1, dans lequel un composant de matière de charge supplémentaire est ajouté, dont les particules sont isotropes.

3. Système d'isolation électrique selon la revendication 1 ou 2, dans lequel un composant de matière de charge est ajouté, dont les particules sont un polymère.

4. Système d'isolation électrique selon la revendication 3, dans lequel le polymère est du polysiloxane, du polybutadiène, du polystyrène, du polychlorure de vinyle, du CTBN, de l'ABS ou du PMMA.

5. Système d'isolation électrique selon l'une des revendications 1 à 5, dans lequel la résine de base est une résine synthétique époxyde durcie par UV, durcie à froid ou durcie à chaud, durcie avec un anhydride d'acide phtalique ou avec une amine.

6. Système d'isolation électrique selon la revendication 5, dans lequel la résine synthétique époxyde est accélérée à base d'azote ou par un catalyseur UV.

7. Système d'isolation électrique selon la revendication 5 ou 6, dans lequel la résine synthétique époxyde est constituée de diglycidyl éther aromatique de bisphénol-A ou de bisphénol-F, et/ou d'une résine synthétique époxyde cycloaliphatique ou d'une novolaque phénolique.

8. Système d'isolation électrique selon la revendication 5 ou 6, dans lequel la résine de base comprend du polyuréthane, du polyéthylène, du polyétherimide, du polypropylène, du polybutadiène, du polystyrène, du polyacrylate ou du polychlorure de vinyle.

9. Système d'isolation électrique selon l'une des revendications 1 à 8, dans lequel les particules du au moins un composant de matière de charge anisotrope ont une dimension de 1 à 100 nm.

10. Système d'isolation électrique selon l'une des revendications 1 à 9, dans lequel le phyllosilicate du au moins un composant de matière de charge anisotrope est présent sous une forme exfoliée avec de l'imidoamine.
